# EUROPEAN PATENT APPLICATION

(11) **EP 4 832 292 A1**
(43) Date of publication of application: **28.10.2026**
(21) Application number: 25382421.3
(22) Date of filing: 25.04.2025
(51) Int. Cl.: H02J 3/38, H02J 3/32, H02J 3/48

(54) **CENTRAL ENERGY MANAGEMENT SYSTEM AND METHOD FOR HYBRID SELF-CONSUMPTION INSTALLATIONS TO AVOID POWER INJECTION AND SELF-CONSUMPTION INSTALLATION**

(71) Applicant: Enfasys Ingeniería S.L., 33203 Gijón (ES)
(72) Inventor: Piedra, José Manuel, Gijón (ES); Garcia Férnandez, Pablo, Gijón (ES); Hoang, Hua Trinh, Nuremberg (DE); Villa Fernández, Geber, Oviedo (ES); Cuadrado Vega, Marcos, Ponferrada (ES)
(74) Representative: Pons IP

(57) **Abstract**

A self-consumption installation configured to avoid power injection into distribution grid comprising: a generation unit; a Battery Energy Storage System (BESS) module; loads connected to the generation unit and the BESS module by means of a busbar; an energy meter connected to the busbar; a distribution grid connected to the energy meter; and a central energy management system (EMS) connected to the generation unit, the BESS module and the energy meter. The central EMS comprises an injection supervisor configured to activate a zero-injection mode or a recovery mode; an asset sharing mechanism, configured to dynamically define a setpoint for the generation unit and the BESS module when the zero-injection mode is activated; and a BESS regulator and a PV regulator. The central EMS allows for correcting energy injection into the grid in less than two seconds, and is particularly efficient and robust, ensuring better energy utilization.

## Description

### OBJECT OF THE INVENTION

The invention relates to the field of self-consumption installations hybridized with Energy Storage Systems (ESS). In particular, the invention relates to the control of the power generated that is injected into the network.

The object of the invention is a method and a central energy management system (EMS) for controlling hybrid installations. The proposed invention allows the simultaneous use of generation units and storage units with the aim of meeting a zero-discharge requirement and, at the same time, maximizing the performance of a generation facility.

Another object of the invention is a self-consumption installation that incorporates the central energy management system (EMS) of the invention.

### STATE OF THE ART

The growing interest in renewable energy has spurred extensive research into distributed energy generation systems, such as photovoltaic (PV) cells, fuel cells, and power networks.

Various connection topologies have been explored to link these energy sources to their loads, factoring in parameters like voltage and current requirements, operating conditions, reliability, safety, and cost.

Additionally, the power output of these energy sources is influenced by manufacturing variations, operating conditions, and environmental factors. Manufacturing inconsistencies can result in identical sources exhibiting differing performance characteristics. Similarly, operating and environmental conditions, such as load and temperature, can affect outputs. For example, in solar installations, some panels might be fully exposed to sunlight while others are shaded, resulting in variable power outputs.

Nowadays photovoltaic self-consumption systems face the challenge of efficiently managing surplus energy produced, especially when generation exceeds local consumption. This particularly introduces various technical and bureaucratic challenges, especially in ensuring grid stability.

In several European countries, installations exceeding 15 kW in urban settings or any capacity in rural areas require prior access and connection permits from the local distribution company for surplus energy injection into the grid. Two main options arise for the connection of self-consumption installations: 1) grid feeding and 2) zero-injection.

The zero-injection reduces bureaucratic procedures and is popular in some European countries. This self-consumption model without surplus expedites project execution and legalization, which requires an anti-injection mechanism to prevent surplus energy injection into the electrical grid.

Several studies have addressed the challenge of zero injection in PV systems. However, the publications available to date have not focused on correcting an injection within a specified time frame. Instead, they have mainly centered on buildings with net zero grid consumption, meaning they aimed not to consume or feed energy into the grid, but overall, without giving much importance to occasional non-compliance..

It is therefore necessary to develop more efficient and flexible solutions for zero-injection control in hybrid self-consumption installations, which has led to the invention presented.

### DESCRIPTION OF THE INVENTION

The present invention relates to a central energy management system (EMS) and a method for self-consumption installations which aims to avoid power injection into the distribution or transmission grid. The central energy management system (EMS) and the method of the invention allow to dynamically allocate the power generated by a generation unit and not required by one or more loads connected to said generation unit. The generation unit could be a photovoltaic (PV) generation unit or an wind generation unit.

The invention also relates to a self-consumption installation which comprises:
- the Generation unit, which in turn comprises one or more photovoltaic inverters;
- a Battery Energy Storage System (BESS) module connected to the Generation unit, which comprises a power converter system (PCS) and one or more batteries and is configured to store the power generated by the Generation unit and not required by the one or more loads;
- the one or more loads electrically coupled to the PV and the BESS module;
- a distribution grid; and
- an energy meter connected to the PV and the BESS module and the distribution grid, wherein the energy meter is defined as a point of connection (POC) and is configured to measure the power obtained or provided to the distribution grid;
- the central energy management system (EMS) connected to the generation unit, the BESS module and the energy meter, which comprises:
   - an injection supervisor configured to receive a power measurement obtained from the energy meter and to activate a zero-injection mode when the power injection measured is below a predefined power injection threshold;
   - an asset sharing mechanism, connected to the injection supervisor, and configured to dynamically define a set-point for the generation unit and the BESS module when the zero-injection mode is activated by calculating a flexible power needed (Pref_flex) as the difference between a PoC set-point previously defined and a minimum value of the power measurement obtained by the energy meter;
   - a BESS regulator comprising a first digital controller and a first delay compensation mechanism and connected to the BESS module and to the asset sharing mechanism; and
   - a generation unit regulator comprising a second digital controller and a second delay compensation mechanism and connected to the generation unit and to the asset sharing mechanism.

Preferably, the injection supervisor configured could be also configured to activate a recovery mode when the power injection measured is over a predefined power injection threshold, being the recovery mode designed to gradually restore normal operation after injection, such as a last known power state before injection, by adjusting the set-point of the Battery Energy Storage System (BESS) module and, if additional compensation is needed, also the set-point of the generation unit, thus ensuring a smooth transition back to, preventing sudden power fluctuations and maintaining system stability.

Preferably, the connection between the central energy management system (EMS) and the generation unit does not exchange power and is intended for receiving data and measurements and delivering setpoints.

As explained before, the invention could also relate to the central energy management system (EMS) isolated from the rest of the elements of the self-consumption installation.

The asset sharing mechanism of the central energy management system (EMS) of the invention is configured such that when the flexible power needed (Pref_flex) is positive, indicating excess of power measured by the energy meter, and the maximum charging power of the BESS module is over the flexible power needed (Pref_flex) the set-point of the BESS module is increased by a value equal to the flexible power needed (Pref_flex). In turn, when the flexible power needed (Pref_flex) is positive and the maximum charging power of the BESS module is below the flexible power needed (Pref_flex) the set-point of the PV is set to the difference between the PoC set-point previously defined and the maximum charging power of the BESS module, and the set-point of the BESS module is set to the maximum charging power. Finally, when the flexible power needed (Pref_flex) is negative, indicating a deficit of power measured by the energy meter, the generation unit and/or the BESS module are configured to provide the necessary power. The operational mode of the installation is evaluated to determine the best way to provide the required power:
- Using the generation unit, the generation power output is increased, ensuring it does not exceed the maximum allowed (max_PV_ref).
- Using the BESS module, it is discharged, provided it remains the discharge limits (max_PCS_discharge).
- Using both, the system prioritizes using generation power first, relying on the BESS module only if the generation unit cannot meet the demand. If neither the generation unit nor the BESS module can supply enough power, the system limits the increase, ensuring safe and controlled operation.

Also, the PV regulator and the BESS regulator are configured to receive a setpoint from the asset sharing mechanism and to calculate a power reference for the generation unit and the BESS module by means of a controller defined as: $C \left(s\right) = \frac{K \left(s\right)}{1 + K \left(s\right) Gnom \left(s\right) \left(1-{e}^{- {T}_{{D}_{s}}}\right)}$

Being *Gnom*: $Gnom \left(s\right) = \frac{1}{τs + 1}$

And wherein K is $K \left(s\right) = τs + \frac{1}{λs} = kp + \frac{ki}{s}$

Wherein $kp = \frac{τ}{λ}$ $ki = \frac{1}{λ}$

In some preferred embodiments, *kp* is equal to 0.156 for the BESS module and 0.3 for the generation unit and ki is 1.25 for BESS module and 1 for PV.

Preferably, the generation unit could comprise a plurality of string inverters. Equally, the Battery Energy Storage System (BESS) module could comprise one or more BESS inverters. Moreover, the BESS module could comprise a plurality of cabinets.

In some embodiments, the load and the distribution grid could be connected to the generation unit and the BESS module by means of a contactor (9) and a transformer (17).

The generation unit, the Battery Energy Storage System (BESS) module, the load and the energy meter could be connected to the central energy management system (EMS) by Modbus-TCP communications.

In some preferred embodiments, the predefined power injection threshold for the activation of the zero grid injection mode is set positive and in the range of [0, 4.4] kW.

Also, the injection supervisor could preferably comprise a smith predictor for compensating the communication delays.

The invention also relates to a control method for self-consumption installations power injection into distribution grid, which comprises the steps of:
- obtaining a power measurement at the PoC using the energy meter;
- activating a zero grid injection mode when the power injection measured is below a predefined power injection threshold;
- defining a setpoint for the generation unit and the BESS module when the zero-injection mode is activated by:
   * defining a BESS state of function (SoF), determining a maximum charging power and a maximum discharging power;
   * calculating a flexible power needed (Pref_flex) as the difference between a PoC set-point previously defined and a minimum value of the power measurement obtained by the energy meter;
   * increasing the set-point of the BESS module by a value equal to the flexible power needed (Pref_flex) when the flexible power needed (Pref_flex) is positive and the maximum charging power of the BESS module is over the flexible power needed (Pref_flex);
   * setting the set-point of the PV to the difference between the PoC set-point previously defined and the maximum charging power of the BESS module, and the set-point of the BESS module is set to the maximum charging power, when the flexible power needed (Pref_flex) is positive and the maximum charging power of the BESS module is below the flexible power needed (Pref_flex); and
   * setting the set-point of the Generation unit to the maximum generation power when the flexible power needed (Pref_flex) is negative and discharging the BESS module only if the generation unit cannot meet the demand; and
- calculating a power reference for the Generation unit and the BESS module by using the setpoint for the Generation unit and the BESS module defined and a controller for the Generation unit and for the BEES module defined as: $C \left(s\right) = \frac{K \left(s\right)}{1 + K \left(s\right) Gnom \left(s\right) \left(1-{e}^{- {T}_{{D}_{s}}}\right)}$ wherein *Gnom* is: $Gnom \left(s\right) = \frac{1}{τs + 1}$ wherein K is: $K \left(s\right) = τs + \frac{1}{λs} = kp + \frac{ki}{s}$ $kp = \frac{τ}{λ}$ $ki = \frac{1}{λ}$ and wherein *kp* is equal to 0.156 for BESS and 0.3 for PV and *ki* is 1.25 for BESS and 1 for PV.

In such a way, the method of the invention allows to use the battery as much as possible. When the battery capacity is not enough to avoid injection, curtailment is applied by limiting the generation power of the generation unit. It is preferable to use the batteries as much as possible since:
- the BESS module has a better dynamic response than inverters of the generation unit, allowing to correct the injection faster and more effectively; and
- it may be more advantageous to store the excess energy produced rather than curtail it.

Thus, the generation unit generates power that is used to feed the loads and the BESS module. The power stored in the BESS and/or obtained from the grid may be used used to feed the load when the PV generated power is not enough for feeding the load. The central energy management system (EMS) is configured to act as a nexus for data acquisition and for determining operational commands or operating instructions. Thus, the central EMS receives data regarding the power at the PoC from the energy meter, and uses the asset sharing mechanism to dynamically adjust the power allocation between the generation unit and the BESS module to avoid power injection into the distribution grid.

Preferably, the control method of the invention could further comprise a step of obtaining the time delay (*T_{D}*) and the time constant (*τ*) by sending a set-point step change and measuring a response time.

More preferably, the time delay (*T_{D}*) of the generation unit could be in the range of 0.4 and 0.6; the time constant (*τ*) of the generation unit could be in the rage of 0.2 and 0.4; the time delay (*T_{D}*) of the BESS module could be in the range of 0.1 and 0.2, and the time constant (*τ*) of the BESS module could be in the range of 0.05 and 0.2

In some preferred embodiments, the time delay (*T_{D}*) of the generation unit is set to 0.5; the time constant (*τ*) of the generation unit is set to 0.3; the time delay (*T_{D}*) of the BESS module is set to 0.15, and the time constant (*τ*) of the BESS module is set to 0.125.

Also, the method of the invention could further comprise a step of simulating the performance of the central energy management system (EMS) using a sample time of 100ms and simulating the response of the plant using a sample time of 1 ms.

When the zero-injection is not able to correct injection before a specific timeout of 1.8 seconds is exceeded, thus alerting that 2 seconds limitation would not be fulfilled, the method of the invention could further comprise a step of activating an emergency signal for immediately stopping energy production.

In more preferably embodiments, the method could further comprise a step of identifying unavailable generation units or the BESS modules and compensating updating the setpoint for the remaining inverters of the generation unit or the BESS module using the asset sharing mechanism.

### DESCRIPTION OF THE FIGURES

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a diagram showing a scheme of a preferred embodiment of the self-consumption installation of the invention.
Figure 2 shows a diagram showing a scheme of a preferred embodiment of the self-consumption installation of the invention including the details of the central energy management system (EMS).
Figure 3 shows a diagram of the control logic of the injection supervisor of the central energy management system (EMS).
Figure 4 shows a diagram of the control logic of the open contactor mechanism of the central energy management system (EMS).
Figure 5 shows a diagram of the control logic of the asset sharing mechanism of the central energy management system (EMS).
Figure 6 shows a diagram of the controller of the perturbed model of the BESS regulator and the PV regulator.
Figure 7 shows a diagram of the result for the response of the BESS module comparing the perturbed model and the nominal model.
Figure 8 shows a diagram of the result for the performance of the BESS module comparing the perturbed model and the nominal model.
Figure 9 shows a diagram of the result for the response of the Generation unit module comparing the perturbed model and the nominal model.
Figure 10 shows a diagram of the result for the performance of the B Generation unit comparing the perturbed model and the nominal model.
Figure 11 shows a self-designed compliance test,of the self-consumption installation of the invention.
Figure 12 shows a self-designed compliance test of the self-consumption installation of the invention executed in real conditions using a HIL.
Figure 13 shows the behavior of the central energy management system (EMS) of the invention in a real facility.
Figure 14 shows a complete compliance test according to the conditions specified in Royal Decree 244/2019, and UNE 217001:2020 standard .

### PREFERRED EMBODIMENTS OF THE INVENTION

The present invention relates to a central energy management system (EMS) (1) and method for controlling self-consumption installations so that these are specially optimized for hybrid installations with energy storage and other flexible energy assets. The proposed solution allows the simultaneous use of PV generation units (2) and BESS modules (5) for energy storage to meet the zero-injection requirements and, at the same time, maximizing the performance of the generation facility. The invention also relates to the self-consumption installation that incorporates said central energy management system (EMS) (1).

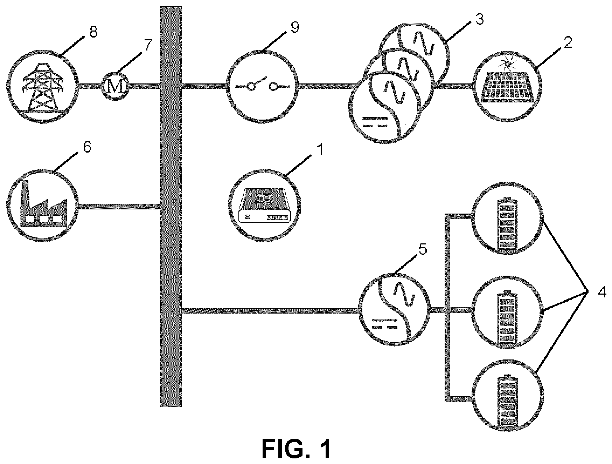

A schematic representation of the self-consumption installation of the invention is shown in Fig. 1.

The self-consumption installation of the invention comprises:
- a generation unit (2) comprised of ten string inverters (3),
- a BESS module (5) made up of three cabinets (4),
- an industrial load (6); and
- a point of coupling (PoC) to the grid (8).

In the self-consumption installation of the invention an energy meter (7) is installed at the PoC.

In the present invention, the load (6) demand is estimated from a main installation meter and the information provided by the Generation unit (2) and BESS module (5), which comprises a power converter solution (PCS). In this way, no other sensors are required.

The central element of the self-consumption installation of the invention is a central energy management system (EMS) (1) which defines the control strategy, acting as a nexus for data acquisition and operational command issuance.

The central energy management system (EMS) (1) interfaces with the Generation unit (2) and the BESS module (5), and the energy meter (7) via modbus TCP, facilitating real-time monitoring and adaptive control to meet operational demands and regulatory compliance.

The central energy management system (EMS) (1) is divided into five main blocks:
1) An asset sharing mechanism (12), which dynamically allocates power adjustments between the Generation unit (2) and BESS module (5), which could incorporate a recovery mechanism, which helps the self-consumption installation return to normal operation after preventing grid injection.
2) An Injection Supervisor (10), responsible for monitoring the grid injection and activating the Zero Injection mode when necessary.
3) A PV close-loop digital controller (13), which maintains the desired output by adjusting the control inputs of the Generation unit (2).
4) A BESS close-loop digital controller (15), which maintains the desired output by adjusting the control inputs of the BESS module (5).
5) Smith Predictors (11, 14, 16), which compensates for installation delays to improve control response.

A first step for calibrating the central energy management system (EMS) of the invention is to collect real data from the installation. This step includes the collection of a dynamic response of the Generation unit (2) and the BESS module (5), communication delays among the different elements of the installation and the central energy management system (EMS) (1), as well as the internal latency within the central energy management system (EMS) (1).

The response times of the Generation unit (2) and the BESS module (5) are measured by sending a step change in open loop and observing the dynamics recorded by the energy meter (7) at the PoC.

Specifically, the time delay (Td) of each element is measured, encompassing communication latencies, reaction time, and energy meter's acquisition time.

Additionally, the τ parameter, or time constant, which defines the dynamic behavior of each element as a first-order system, is meticulously documented.

These parameters are crucial for accurately modeling and simulating the installation and for designing an effective Zero Injection regulator.

Tables I and II show the measured parameters for the time delay (Td) and the τ parameter for the Generation unit (2) and the BESS module (5).

**Table I.**

| Components | Values (s) |
|---|---|
| *T_{d,pv}* | 0.5 |
| [*T_{dmin,pv}*, *T_{dmax,pv}*] | [0.4, 0.6] |
| *τₚᵥ* | 0.3 |
| [τ*_{min,pv}, τ_{max,pv}*] | [0.2, 0.4] |

**Table II.**

| Components | Values (s) |
|---|---|
| *T_{d,pcs}* | 0.15 |
| [*T_{dmin,pcs}, T_{dmax,pcs}*] | [0.1, 0.2] |
| *τ_{pcs}* | 0.125 |
| [*τ_{min,pcs}, τ_{max,pcs}*] | [0.05, 0.2] |

Due to the accuracy of measuring devices and communication channels, the parameter models are obtained within a range of variations.

Given the digital nature of the control system, the central energy management system (EMS) (1) is simulated using a sample time of 100 ms, while the other elements of the installation are simulated with a sample time of 1 ms.

The Generation unit (2) and the BESS module (5) are modeled as current sources with PI regulation, based on observed inverter dynamics. Additional slewrate as well as delays can be added between the reference and the final power converter command simulating communication latencies.

Load consumption was modeled similarly, employing synthetic profiles (19) derived from nominal transformer ratings, recorded consumption data, and compliance/testing requirements as per UNE 217001:2015, and incorporating electrical network models and sensor delays measured in the actual setup.

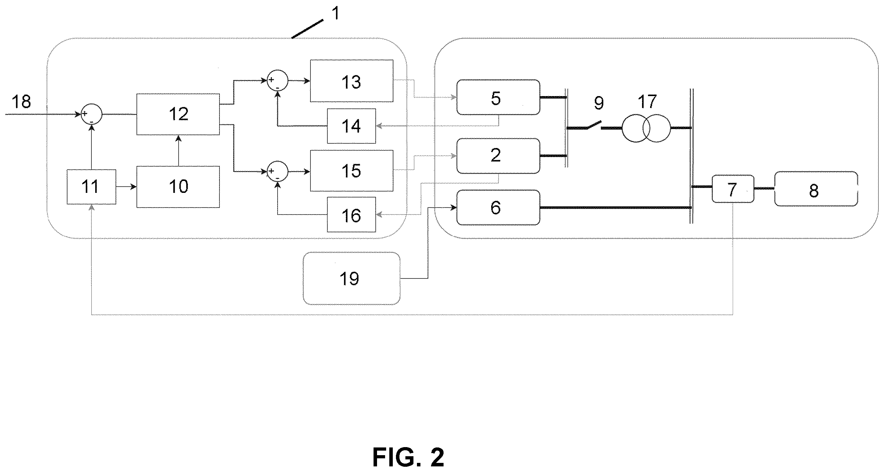

A general overview of the installation under study is shown in Fig. 2.

The Simulink plant simulation facilitates not only virtual testing but also execution on a SpeedGoat HiL system. This approach allows for real-time algorithm development and testing, interfacing directly with the central energy management system (EMS) (1) via communication protocols. The HiL setup provides a safe, controlled environment for algorithm refinement, ensuring that the final control strategies can be deployed in the field without risking integrity or operational security.

The specific implementation of the central energy management system (EMS) (1) of the invention is shown in the right box of Fig. 2.

The Zero-Injection central energy management system (EMS) (1) is composed of distinct modules that delineate the control strategy. The power measurement at the PoC with the electrical grid serves as a critical parameter for determining the activation of the Zero-Injection controller and quantifying the required power compensation, by using the Injection supervisor (10). Four control modes (Only PV Mode, Only PCS Mode, Shared Mode, and Disabled Mode) and four states (Ready, Zero Injection, Waiting, and Recovery) are defined for managing energy injection using PV and BESS assets.

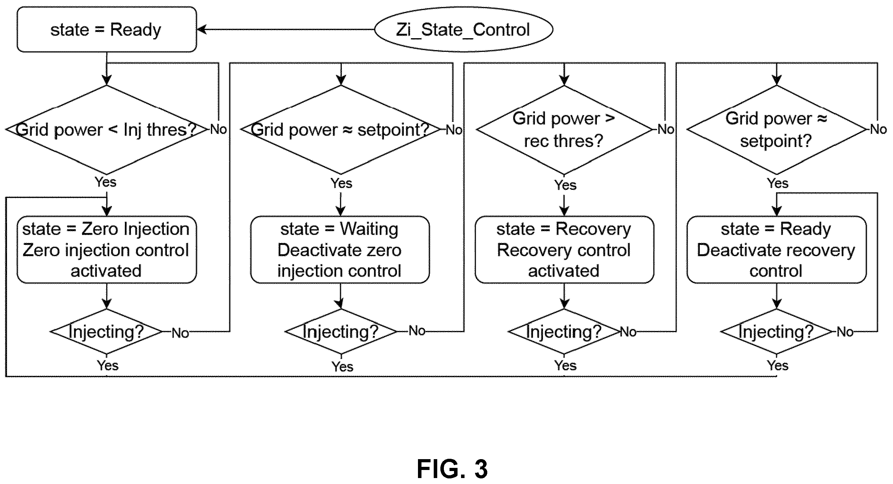

These tasks are performed through the blocks within the controller illustrated in Figures 3 to 5. In Figure 3 it is shown the logic for activating the four states. The zero-injection state is activated when the power measured by the energy meter (7) is below the injection threshold (18) previously fixed. If the power measured by the energy meter (7) is close to the PoC set-point, the waiting state is activated, wherein the zero-injection state is deactivated. If the power measured by the energy meter (7) is over a recovery threshold previously fixed, the recovery state is activated.

The recovery state is activated after an injection has occurred and its corresponding correction action (activation of zero-injection state) has been performed, and if the power at the point of coupling (PoC), measured by the energy meter (7), exceeds a configurable threshold (ZI_pow_dis), usually set as twice the injection threshold, or if a specific timeout (max_waiting_time) has been exceeded. Alternatively, the recovery state is also activated after clearing an alarm condition to restore normal operating conditions.

When the recovery state is activated, the BESS module (5) setpoint is gradually adjusted to its last known value before the injection, always in a positive direction following a generator convention (i.e., reducing the charging power). Once the battery has reached its final state, production of the generation unit (2) is gradually increased in a controlled manner until the power at the grid connection point reaches the desired reference value (PoC set-point).

If the previous actions take longer than (max_rec_time) a predefined time in seconds to complete, the recovery process is considered finished.

Once the recovery process is complete, other controllers can take over the EMS operation, enabling further optimizations such as maximizing self-sufficiency.

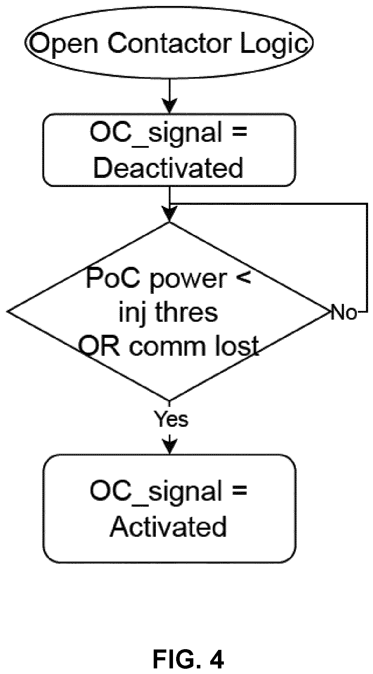

In Figure 4, the open contactor logic is shown. An open contactor signal is activated when the power measured by the energy meter (7) is below the injection threshold (18) or a common lost value.

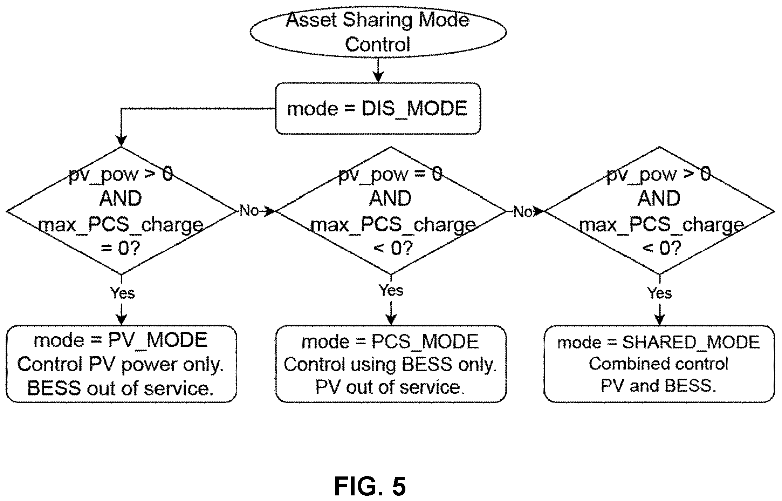

Also, Figure 5 shows the logic of the asset sharing mechanism (12). The general logic of the asset sharing mechanism (12) is to activate PV only mode when the maximum charging power of the BESS module (5) is equal to 0, indicating that the battery is fully charged or not available, and the PV power is greater than 0. Equally, PCS only mode is activated when the maximum charging power of the BESS module (5) is greater than 0 and the power generation measured by the energy meter (7) is equal to 0, due a failure in the the system or a lack of irradiance. Finally, if the maximum charging power of the BESS module (5) is greater than 0 and the power generation measured by the energy meter (7) is greater than 0, a shared mode is activated, being the BESS module (5) and the PV generation unit (2) available.

The injection supervisor (10), activates or deactivates various modes when power injection exceeds a specified threshold. The zero injection mode is activated when the power measurement obtained from the energy meter (7) falls below a configurable value, called injection threshold (18). Preferably, this value is set to be positive and very close to zero, within the measurement system's precision.

The activation of the zero injection mode is contingent upon detecting grid injection, defined as the power of any phase at the PoC falling below a power injection configurable threshold set by the precision class of the sensors used.

Also, an emergency signal "Open Contactor" could be activated, immediately halting all generation to ensure compliance with regulatory conditions when the asset sharing mechanism cannot correct the injection of power to the distribution grid (8).

The asset sharing mechanism (12) is implemented to allocate power adjustments between the Generation unit (2) and the BESS module (5), based on the BESS state of function (SoF). The BESS state of function (SoF) considers the maximum charging and discharging power of the BESS module (5). The objective is to prioritize the utilization of the BESS module (5) due to its rapid response characteristics and to take advantage of solar energy by storing excess energy in the batteries rather than curtailing generation (thus, maximizing installation autarky).

The operational logic of the asset sharing mechanism (12) varies according to the mode of operation (disabled, zero-injection mode, recovery mode) selected by the injection supervisor (10).

Additionally, the asset sharing mechanism (12) can identify the unavailability of any element of the installation, energy asset, at any given time, compensating for injection or performing recovery using the remaining available elements of the installation.

The asset sharing mechanism (12) dynamically adjusts the power allocation between the Generation unit (2) and the BESS module (5) based on a "flexible power" needed (Pref flex).

The flexible power" needed (Pref flex) is calculated as the difference between a PoC set-point and a minimum value of the power measurement obtained by the energy meter (7). Thus, when Pref_flex is positive, indicating excess power injection, the available battery charging power is determined to check if it is sufficient to cover Pref_flex. If so, the battery is charged with the excess power as much as possible (max charging power); otherwise, the remaining is managed by reducing the solar power output.

Conversely, if Pref flex is negative, indicating a deficit, the algorithm prioritizes maximizing the PV power output maximizing the autarky.

As an example, when Pref_flex is positive and Pref_flex ≤ max charging power of the BESS module (5), then BESS reference is set to BESS_reference = BESS_power - Pref_flex and the PV reference is set to PV reference PV_reference = PV_power. In the context of the invention, a generator convention is used for the BESS module, such that the battery power is negative when charging and positive when discharging.

The set-points determined by the Asset Sharing mechanism (12) are supplied to the closed-loop digital controllers (13, 15), each one accurately tuned for the Generation unit (2) and the BESS module (5) respectively.

The digital controllers (13, 15) process the input set-points calculated by the Asset Sharing mechanism (12) to determine the final power reference signals for both the Generation unit (2) and the BESS module (5), thereby preventing energy from being injected into the grid within 2s, in accordance with regulatory standards. In turn, the recovery state is active, normal operation after injection is gradually restored.

Regarding the Asset Sharing mechanism (12), to ensure a rapid, yet smooth and safe response of the energy assets, minimizing abrupt interruptions by avoiding the unnecessary opening of safety switch, the central energy management system (EMS) (1) is configured to manage power references sent to the Generation unit (2) and the BESS module (5). As the communication delays are not the same for both elements, each one is separately controlled.

A BESS regulator and a PV regulator incorporate each one a digital controller (13, 15) and a Smith predictor (14, 16) for delay compensation.

The BESS regulator and the PV regulator are modeled by using multiplicative perturbation models as: ${PV}^{˜} \left(s\right) = PV \left(s\right) \left(1+{W}_{m , pv}\left(s\right)\right)$ where ${PV}^{˜} \left(s\right)$ *is* the Generation unit (2) perturbed model, *PV* (*s*) = $\frac{1}{{τ}_{pv} s + 1} {e}^{- {T}_{d , pv} s}$ is the nominal PV model, and the perturbed weighting function *W_{m,pv}*(*s*) is expressed as: ${W}_{m , pv} \left(s\right) = \frac{{τ}_{pv} s + 1}{\left({τ}_{pv}s-{Δτ}_{pv}\right) s + 1} {e}^{{ΔT}_{d , pv} s} - 1$ where ${Δτ}_{pv} = {τ}_{max , pv} - \frac{{τ}_{max , pv} + {τ}_{min , pv}}{2}$, and ${ΔT}_{d , pv} = {T}_{dmax , pv} -$ $\frac{{T}_{dmax , pv} + {T}_{dmin , pv}}{2}$.

The same is applicable to the BESS module (5), resulting: ${PCS}^{˜} \left(s\right) = PCS \left(s\right) \left(1+{W}_{m , pcs}\left(s\right)\right)$ where ${PCS}^{˜} \left(s\right)$ is the BESS module (5) perturbed model, *PV* (*s*) = $\frac{1}{{τ}_{pcs} s + 1} {e}^{- {T}_{d , pv} s}$ is the nominal PCS model, and the perturbed weighting function *W_{m,pcs}*(*s*) is expressed as: ${W}_{m , pcs} \left(s\right) = \frac{{τ}_{pcs} s + 1}{\left({τ}_{pcs}s-{Δτ}_{pcs}\right) s + 1} {e}^{{ΔT}_{d , pcs} s} - 1$ where ${Δτ}_{pcs} = {τ}_{max , pcs} - \frac{{τ}_{max , pcs} + {τ}_{min , pcs}}{2}$, and ${ΔT}_{d , pcs} = {T}_{dmax , pcs} -$ $\frac{{T}_{dmax , pcs} + {T}_{dmin , pcs}}{2}$.

As the PV regulator and the BESS regulator have a similar model, a common control approach can be applied to regulate both elements.

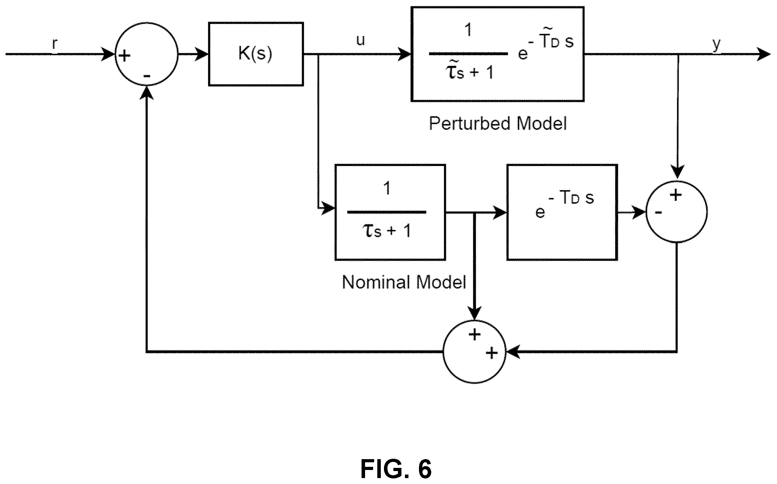

The controller structure for a perturbed first-order system is shown in Figure 6.

Also, it is defined a condition that the central energy management system (EMS) must fulfill to have robust stability and robust performance as: $\left|{W}_{p}\left(s\right){S}_{nom}\left(s\right)\right| + \left|{W}_{m}\left(s\right){T}_{nom}\left(s\right)\right| < 1$ (5) where *Wₚ*(*s*) and *Wₘ*(*s*) are a performance weighting function and a perturbed weighting function, respectively. *Sₙₒₘ*(*s*) and *Tₙₒₘ*(*s*) are the nominal sensitivity and the nominal complementary sensitivity function, respectively. ${S}_{nom} \left(s\right) = \frac{1}{1 + {G}_{nom} \left(s\right) C \left(s\right)}$ $Tnom \left(s\right) = \frac{{G}_{nom} \left(s\right)}{1 + {G}_{nom} \left(s\right) C \left(s\right)}$ *Gₙₒₘ*(*s*) is the nominal model, C(s) is the controller combining a PI feedback controller K(s) and a Smith predictor as shown in Fig. 6.

The transfer function of *Gₙₒₘ*(*s*) and C(s) are : $Gnom \left(s\right) = \frac{1}{τs + 1}$ (8) $C \left(s\right) = \frac{K \left(s\right)}{1 + K \left(s\right) Gnom \left(s\right) \left(1-{e}^{- {T}_{{D}_{s}}}\right)}$ (9)

The PI controller has the form: $K \left(s\right) = τs + \frac{1}{λs} = kp + \frac{ki}{s}$ (10) wherein $kp = \frac{τ}{λ}$ $ki = \frac{1}{λ}$

It should be noticed that with this structure, the dynamics of the nominal system is canceled.

The variable λ is a tuning parameter that provides a trade-off between bandwidth and robustness of the central energy management system (EMS). A small λ provides a fast response but makes the central energy management system (EMS) more sensitive to the model's uncertainties and viceversa. The variable λ is iteratively adjusted to get the desired response and fulfill the previously stated condition.

For the PV regulator and the BESS regulator, the performance weighting function is chosen as Wp = 0.5.

Applying the tuning approach explained, the control parameters are obtained as shown in Table III.

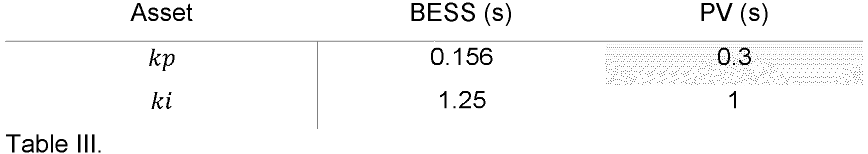

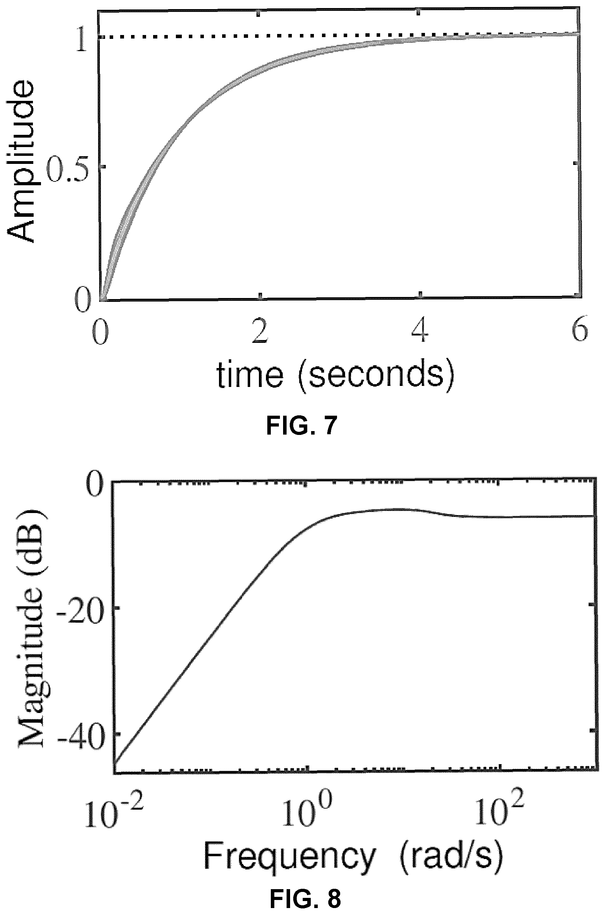

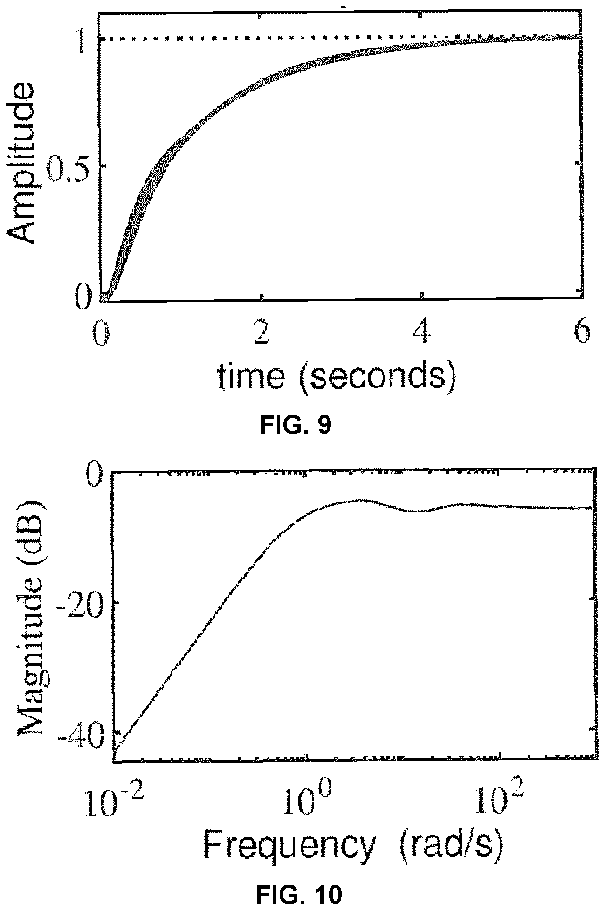

The step responses and robust performance for both PV and PCS are shown in Figures 7 to 10. The performance is robust since it fulfills the condition (5) of being smaller than 1 (0 dB). The step responses show in Figures 7 to 10 that the central energy management system (EMS) is stable for the whole range of parameter variations.

Now, the results from simulations testing the effectiveness of the central energy management system (EMS) (1) of the invention for zero injection in photovoltaic systems with energy storage are presented.

Using Simulink for the installation model and PLECS for the central energy management system (EMS) (1), the results of the central energy management system (EMS)'s performance are compared against the UNE 217001:2020 standard load profiles. The main goal is to confirm that the central energy management system (EMS) can prevent grid injection within the two-second limit set by the regulations, proving its compliance and readiness for real-world use.

For validation, load profiles replicating the more restrictive conditions given by the UNE 217001:2020 have been used, confirming the central energy management system (EMS)'s effectiveness in preventing grid injection within the required time frame.

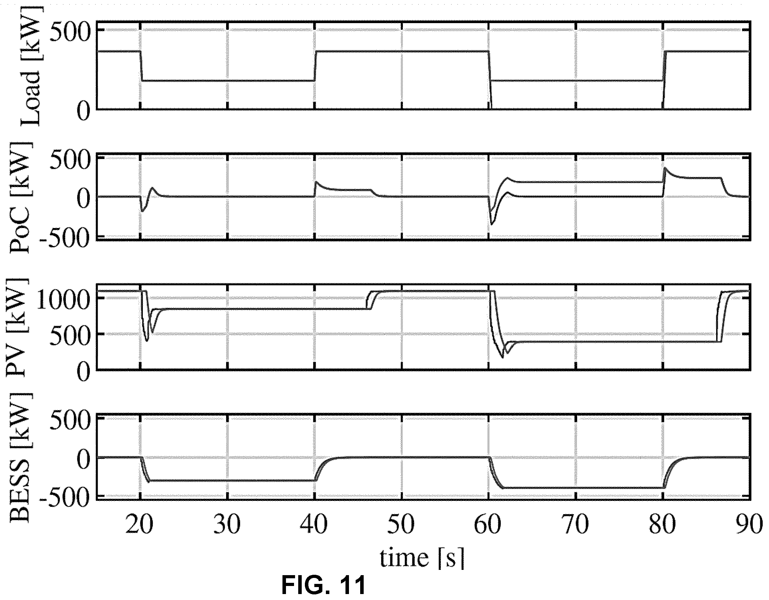

Fig. 11 illustrates a simulation result where the following events are considered:
1) an abrupt load drop from nominal to 50% at t=20 s,
2) the load increasing to the rated value at t=40 s,
3) starting of the recovery mechanism,
4) an unbalance load drop in phase a to 0%, and in phases b and c to 50% at t=60 s.

In all cases, the grid injection is kept below the maximum of 2 seconds allowed. The simulations accurately followed the load profiles from UNE 217001:2020, providing a solid basis for evaluating the central energy management system (EMS). The results showed that the central energy management system (EMS) effectively stops grid injection within the required two-second limit.

These results validate the robustness of the control algorithm under varied load conditions. Key findings from the simulations include:
- Mode Control mechanism quickly responds to changing load conditions, allowing the installation to switch between operational states rapidly.
- The Asset Sharing mechanism efficiently distributes load adjustments between the photovoltaic system and the energy storage unit, improving the overall efficiency and reliability of the Zero Injection strategy.
- The digital regulators adjust the power output of both the Generation unit (2) and the BESS module (5), ensuring no energy is injected into the grid in all tested scenarios.

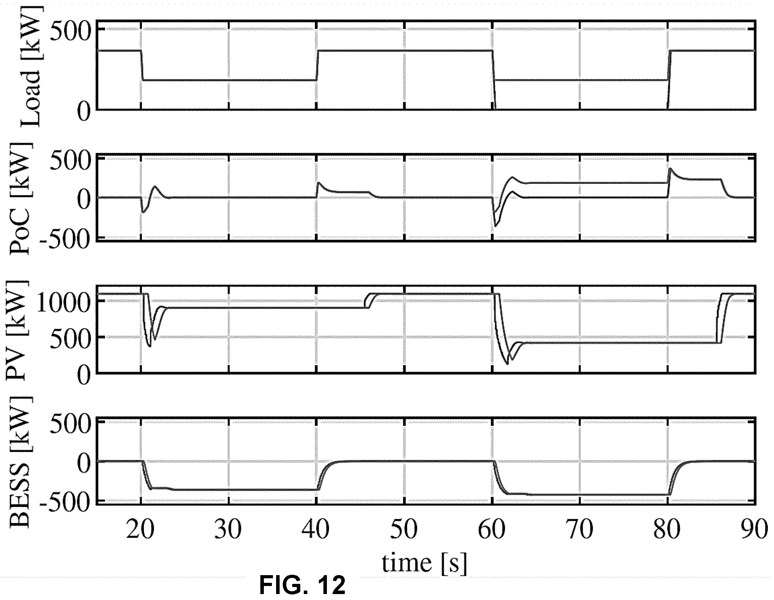

Building on the results of the simulation, a control system code has been auto-generated using PLECS software. This code has been deployed on the central energy management system (EMS) (1) for real-world operational testing. The real plant has been simulated using a SpeedGoat hardware-in-the-loop machine. In Figure 12, the same synthetic profiles are applied, this time using the real controller and the HIL setup. As it can be seen, remarkable close results are achieved, thus validating the proposed control scheme.

When comparing the simulation results with the HIL results, it is evident that the central energy management system (EMS) performs consistently across both environments. The minor discrepancies observed are within acceptable ranges and can be attributed to the inherent differences between simulated and real-time conditions.

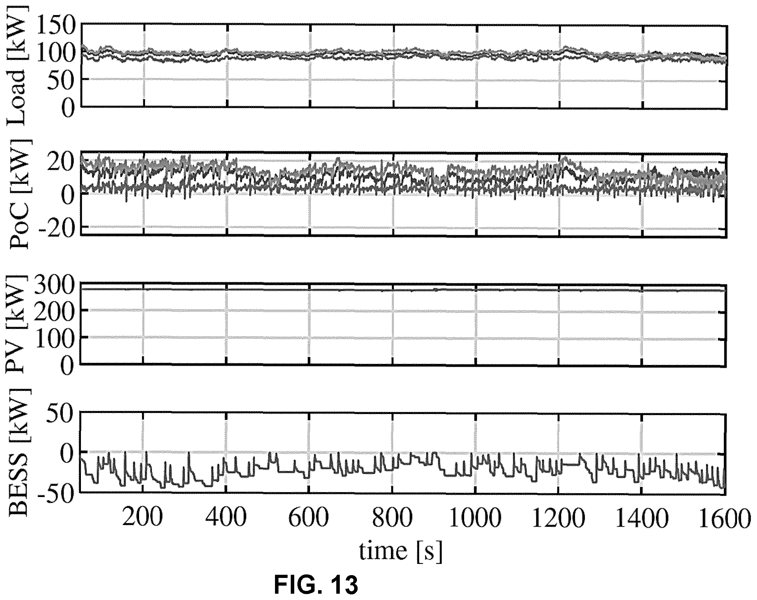

Once all tests were executed, both in simulation and on an actual Energy Management System (1) in real-time, simulating the plant under real conditions with hardware in-the-loop, the final step involved deploying the device in the field, at the actual installation where energy injection must be controlled. In this context, the plant operates under a load consistent with its normal activity, and both the Generation unit (2) and the BESS module (5) are controlled in real-time. The controller's performance, following the load and generation conditions specified in section I.3.1 "Steady State Tolerance" of Royal Decree 244/2019, and test 4.1 proposed by the UNE 217001:2020 standard, is shown in Figure13.

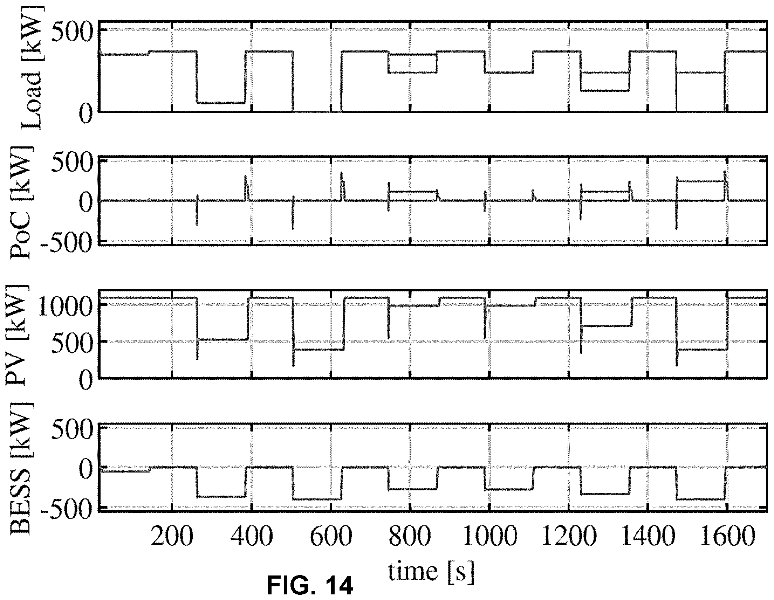

Also, an excerpt of the real operational data from the controller running in the actual facility, which maximizes self-sufficiency while avoiding energy injection into the grid, can be seen in Figure 14.

The results shown using the real controller and HIL validation confirm the algorithm's effectiveness in complying with the regulatory framework used for the validation Key findings include the creation and validation of a Zero Injection central energy management system (EMS) that dynamically adjusts to prevent grid injection using PV and BESS assets, a recovery mechanism suitable for returning the plant to the previous situation once the energy export is controlled, and an asset sharing strategy for optimal energy distribution among flexible assets.

The comprehensive simulation of the actual plant intended for the final application has demonstrated the central energy management system (EMS)'s performance in preventing energy export, adhering to the stipulated constraints of Spanish regulations.

This highlights the potential of the proposed control algorithm to significantly contribute to the operational efficiency of photovoltaic self-consumption installations, ensuring regulatory compliance while optimizing energy utilization. HIL and experimental results in the real installation confirm the central energy management system (EMS)'s compliance with regulatory standards, demonstrating its viability for real-world application.

## Claims

1. A central energy management system (EMS) (1) connected to one or more busbar, which is connected to a generation unit (2) a BESS module (5) and an energy meter (7), being the energy meter (7) connected to grid (8), and wherein the central energy management system (EMS) (1) comprises:
- an injection supervisor (10) configured to receive a power measurement obtained from the energy meter (7) and to activate a zero-injection mode when the power injection measured is below a predefined power injection threshold (18);
- an asset sharing mechanism (12), connected to the injection supervisor (10), and configured to dynamically define a setpoint for the generation unit (2) and the BESS module (5) when the zero-injection mode is activated by calculating a flexible power needed (Pref_flex) as the difference between a PoC set-point previously defined and a minimum value of the power measurement obtained by the energy meter (7);
- a BESS regulator comprising a digital controller (13) and a smith predictor (14) and connected to the BESS module (5) and to the asset sharing mechanism (12); and
- a PV regulator comprising a digital controller (15) and a smith predictor (16) and connected to the generation unit (2) and to the asset sharing mechanism (12);
wherein when the flexible power needed (Pref_flex) is positive and the difference between a maximum charging power of the BESS module (5) and a current charging power of the BESS module (5) is over the flexible power needed (Pref_flex) the set-point of the BESS module (5) is increased to absorb the power generation measured by the energy meter (7), when the flexible power needed (Pref_flex) is positive and the difference between the maximum charging power of the BESS module (5) and a current charging power of the BESS module (5) is below the flexible power needed (Pref_flex) the set-point of the BESS module (5) is set to a maximum available limit, fixed by its state of charge (SoF), and the set-point of the generation unit (2) is set to the difference between the PoC set-point previously defined and the maximum charging power of the BESS module (5), and when the flexible power needed (Pref_flex) is negative the set-point of the generation unit (2) is increased until the flexible power needed (Pref_flex) is 0; and wherein the PV regulator and the BESS regulator are configured to receive a setpoint from the asset sharing mechanism (12) and to calculate a power reference for the generation unit (2) and the BESS module (5) by means of a controller defined as: $C \left(s\right) = \frac{K \left(s\right)}{1 + K \left(s\right) Gnom \left(s\right) \left(1-{e}^{- {T}_{{D}_{s}}}\right)}$ Being *Gnom:* $Gnom \left(s\right) = \frac{1}{τs + 1}$ And wherein K is $K \left(s\right) = τs + \frac{1}{λs} = kp + \frac{ki}{s}$ Wherein $kp = \frac{τ}{λ}$ $ki = \frac{1}{λ}$

2. The central energy management system (EMS) according to claim 1, wherein the predefined power injection threshold (18) for the activation of the zero grid injection mode is positive and in the range of [0, 4,8] kW/unit.

3. The central energy management system (EMS) according to any of claims 1 to 2, wherein the injection supervisor (10) comprises a smith predictor (11).

4. A self-consumption installation to avoid power injection into distribution grid comprising a central energy management system (EMS) (1) according to any of claims 1 to 3, and:
- one or more busbars,
- a generation unit (2) comprising one or more photovoltaic inverters (3), and connected to the busbars;
- a Battery Energy Storage System (BESS) module (5) connected to the busbars, which comprises a power converter system (PCS) and one or more batteries (4);
- one or more loads (6) connected to the busbars;
- an energy meter (7) connected to the busbars; and
- a distribution grid (8) connected to the energy meter (7), wherein the energy meter (7) is defined as a point of connection (POC);
wherein the central energy management system (EMS) (1) is connected to the generation unit (2), the BESS module (5) and the energy meter (7).

5. The self-consumption installation according to claim 4, wherein the generation unit (2) comprises a plurality of string inverters (3).

6. The self-consumption installation according to any of claims 4 to 5, wherein the Battery Energy Storage System (BESS) module (5) comprises one or more BESS inverters.

7. The self-consumption installation according to any of claims 4 to 6, wherein the loads (6) and the distribution grid (8) are connected to the busbar by means of a contactor (9) and a transformer (17).

8. The self-consumption installation according to any of claims 4 to 7, wherein the generation unit (2), the Battery Energy Storage System (BESS) module (5), the loads (6) and the energy meter (7) are connected to the central energy management system (EMS) (1) by Modbus-TCP communications.

9. A control method for self-consumption installations power injection into distribution grid, comprising the steps of:
- obtaining a power measurement at the PoC using the energy meter (7);
- activating a zero grid injection mode when the power injection measured is below a predefined power injection threshold (18);
- defining a setpoint for the generation unit (2) and the BESS module (5), wherein positive power for the BESS module (5) relates to charging and negative power for the BESS module (5) relates to discharging, when the zero-injection mode is activated by:
* defining a BESS state of function (SoF), determining a maximum charging power and a maximum discharging power;
* calculating a flexible power needed (Pref_flex) as the difference between a PoC set-point previously defined and a minimum value of the power measurement obtained by the energy meter (7);
* increasing the set-point of the BESS module (5) when the flexible power needed (Pref_flex) is positive and the difference between a maximum charging power of the BESS module (5) and a current charging power of the BESS module (5) is over the flexible power needed (Pref_flex);
*setting the set-point of the BESS module (5) to a maximum available limit, fixed by its state of charge (SoF), and setting the set-point of the generation unit (2) to the difference between the PoC set-point previously defined and the maximum charging power of the BESS module (5), when the flexible power needed (Pref_flex) is positive and the difference between the maximum charging power of the BESS module (5) and the current charging power of the BESS module (5) is below the flexible power needed (Pref_flex); and
- calculating a power reference for the generation unit (2) and the BESS module (5) by using the setpoint for the generation unit (2) and the BESS module (5) defined and a controller for the generation unit (2) and for the BEES module (5) defined as: $C \left(s\right) = \frac{K \left(s\right)}{1 + K \left(s\right) Gnom \left(s\right) \left(1-{e}^{- {T}_{{D}_{s}}}\right)}$ wherein *T_{D} is a time delay* previously obtained and *Gnom* is: $Gnom \left(s\right) = \frac{1}{τs + 1}$ wherein *τ* is a time constant previously obtained and K is: $K \left(s\right) = τs + \frac{1}{λs} = kp + \frac{ki}{s}$ wherein *kp* and *ki* are: $kp = \frac{τ}{λ}$ $ki = \frac{1}{λ}$

10. The control method according to claim 9, further comprising a step of obtaining the time delay (*T_{D}*) and the time constant (*τ*) by sending a step change and measuring a response time.

11. The control method according to any of claims 9 to 10, wherein the time delay (*T_{D}*) of the generation unit (2) is in the range of 0.4 and 0.6; the time constant (*τ*) of the generation unit (2) is in the rage of 0.2 and 0.4; the time delay (*T_{D}*) of the BESS module (5) is in the range of 0.1 and 0.2, and the time constant (*τ*) of the BESS module (5) is in the range of 0.05 and 0.2

12. The control method according to any of claims 9 to 11, further comprising a step of activating a recovery mode after the zero injection mode is activated and the flexible power needed (Pref_flex) is reduced to 0 and when:
• the power at the point of coupling exceeds a configurable threshold (ZI_pow_dis);
• a specific timeout (max_waiting_time) has been exceeded; or
• after clearing an alarm condition to restore normal operating conditions;
and wherein in the recovery mode, the BESS module (5) setpoint is gradually adjusted to a last known value before injection occurs, and once the battery has reached its final state, PV production is gradually increased until the power measured by the energy meter (7) reaches a desired reference value (PoC set-point).

13. The control method according to any of claims 9 to 12, further comprising a step of simulating the performance of the central energy management system (EMS) (1) using a sample time of 100ms and simulating the response of the self-consumption installation using a sample time of 1 ms.

14. The control method according to any of claims 9 to 13, further comprising a step of activating an emergency signal for immediately stopping energy production when the recovery mode is activated.

15. The control method according to any of claims 9 to 14, further comprising a step of identifying at least one unavailable load and compensating an excess of power generated updating the setpoint for the generation unit (2) and the BESS module (5) using the asset sharing mechanism (12).
